# EUROPEAN PATENT SPECIFICATION

(11) **EP 0 640 377 B1**
(45) Date of publication and mention of the grant of the patent: **04.06.1997**
(21) Application number: 94112750.8
(22) Date of filing: 16.08.1994
(51) Int. Cl.: B01D 53/34, B01D 53/32

(54) **Process and apparatus for removing pollutants from a combustion gas**
Verfahren und Vorrichtung zum Entfernen von Verunreinigungen aus Verbrennungsgasen
Procédé et dispositif pour l'élimination de polluants de gaz de combustion

(30) Priority: 27.08.1993 IT MI931858
(43) Date of publication of application: 01.03.1995
(73) Proprietor: ENEL S.p.A., I-00198 Roma (IT)
(72) Inventor: Civitano, Luigi, c/o Enel S.p.A. Centro Ricera, 0-56122 Pisa (IT)
(74) Representative: Ferraiolo, Ruggero

(56) References cited:
- EP-A- 0 474 263
- EP-A- 0 532 841
- DE-A- 3 907 703
- DE-A- 3 914 673
- DATABASE WPI Derwent Publications Ltd., London, GB; AN 87-197211 & SU-A-1 271 554 (LENINGRAD PLEKHANOV) 20 June 1984

## Description

The present invention concerns a method for the removal of pollutants from a combustion gas and a plant for carrying out the method, wherein, in a post-combustion type plant, SO₂ and NO_{X} are removed with the gas energizing technique.

According to the state of the art, with the above mentioned methods and plants the removal of SO₂ generally takes place through thermo-chemical reactions, even when there is no energy transferred to the gas, and through radical reactions, when energy is transferred to the gas. The radicals produced by the transferral of energy to the gas similarly provide for the removal of nitrogen oxides.

Firstly, the interaction between the gas and electrons of suitable energy is caused, so as to transform the SO₂ and NO_{X}, respectively into H₂SO₄ and HNO₃ and, hence, an input of NH₃, so as to convert these acids into ammonia salts and, lastly, a collection of said salts in electrostatic precipitators and/or in sleeve filters.

Within the state of the art we refer especially to a method and plant, as described by the applicant in EP-A-0 532 841, in which the removal of pollutants takes place conventionally by means of: cooling of the combustion gas; passage of the gas in at least a first electrostatic precipitator, to gather most of the light ashes; gas energizing, to partly convert SO₂ into H₂SO₄ and NO_{X} into N₂, NO₂, and HNO₃; and addition of ammonia, to convert the latter acids into ammonia salts, to be gathered in at least a further electrostatic precipitator. The main characteristics of this process are the maintenance of the temperature at around 100°C, so as to reduce the thermo-chemical conversion of the SO₂ into acidic sulphides and sulphates and, subsequently, the injection of H₂O₂ into the gas, to convert the residual SO₂ into H₂SO₄ which reacts with NH₃ to produce ammonia salts.

The inconvenience of this state of the art is that it provides a limited removal of NO_{X}, because of the strong concentration of NO₂ deriving from the radical conversion of NO. This inconvenience is, formally, avoided by accepting an NH₃ content of various dozens of ppmv in the output gas from the plant and, concretely, by inserting a sleeve filter into the plant; however, this causes blockage of the filter and leads to high operating costs and to interruptions in the running of the plant for maintenance activities.

It is also worth mentioning that DE-A-3 907 703 discloses a method and an apparatus, pertaining the same field of the present invention, wherein the energizing step is splitted into a plurality of steps, and a washing operation with a chemical solution is carried out between the steps.

The invention obviates the above mentioned inconveniences by providing a method and a plant as delineated, respectively, in claims 1 and 2.

The main advantages of the invention are the greater effectiveness of the degree of removal of nitrogen and sulphur oxides, the elimination of the conventional sleeve filter, the reduction in the consumption of hydrogen peroxide and the capture of ammonia salts, as gathered from the above mentioned condensation, through water evaporation. Moreover, by means of the injection of the condensate, the problem of managing the liquids containing ammonia salts is solved and at the same time the capturing effectiveness of the first electrostatic precipitator is increased, since the ammonia salts injected do reduce the resistivity of volatile ashes;yet more, the thermo-chemical reaction between SO₂ and NH₃ on the heat exchangers is improved and this leads to a reduction of the quantity of H₂O₂ to be injected downstream the second heat exchanger.

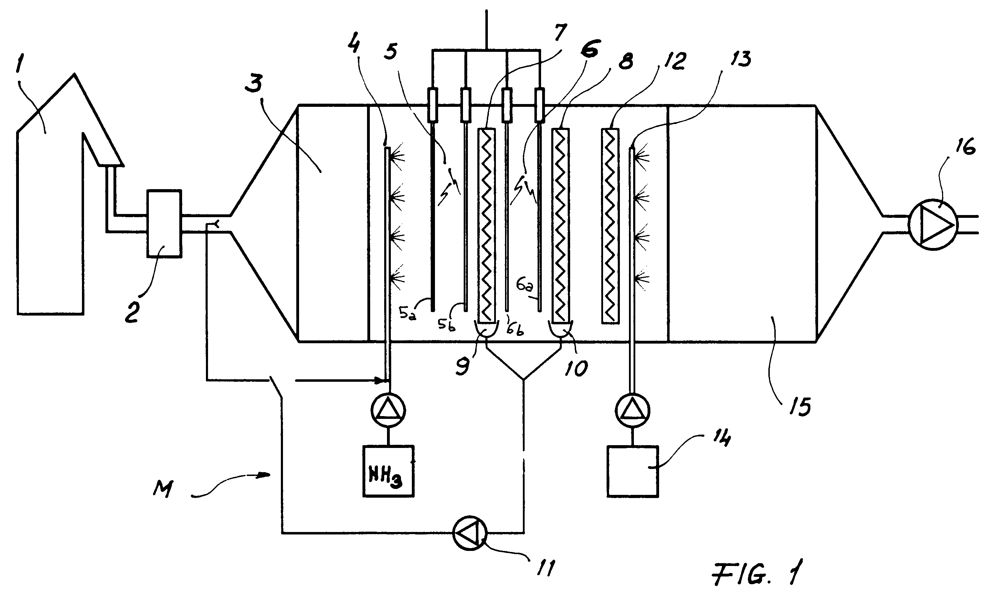

The invention will be described below in further detail by means of a preferred embodiment as illustrated in
FIG. 1 that represents a general diagram of the method and plant.

Figure 1 shows a burner 1 in which coal is burned; a heat exchanger 2 in which the combustion gas temperature drops to 140 - 150°C; a first electrostatic precipitator 3 to remove up to about 90% of light ashes from the combustion gas; an electrode energizing structure 5, 6 similar to an electrostatic precipitator, e.g. including a series of parallel plates (not shown) connected to earth and interweaved with a series of frames bearing wires 5a, 5b, 6a, 6b fed by a positive impulse voltage from 70 to 100 kV, with a repeat frequency adjustable within a range between 30 - 300 impulses per second, so as to transfer to the combustion gas sufficient energy to remove nitrogen oxides in the desired percentage; two heat exchangers 7, 8 suited to condense the water contained in fumes upon their walls; means M to inject said condensate gathered by heat exchangers 7, 8 at the inlet to said first electrostatic precipitator 3; an injection system 4 suited to adding ammonia to the combustion gas and possibly also the condensate gathered by said heat exchangers 7, 8; means 9, 10 to gather the condensate produced by said heat exchangers 7, 8; a pump 11 that injects said condensate into the plant; a heat exchanger 12 to raise the temperature of the combustion gas; means 13 suited to injecting H₂O₂ held in a container 14 in liquid or vapour form to convert residual sulphur dioxide into sulphuric acid that, reacting with the residual ammonia, produces ammonia sulphate; an electrostatic precipitator 15 that captures ammonia salts, especially the ammonia sulphate formed following the removal of polluting oxides; a blowing-sucking fan 16 upstream the plant funnel, not shown.

## Claims

1. A method for the removal of pollutants from a combustion gas from a burner (1) in which the following stages take place : cooling the combustion gas arriving from the burner in at least a first heat exchanger (2); removing of up to about 90% of the light ashes contained in the gas in at least a first electrostatic precipitator (3); converting the sulphur dioxide (SO₂) and nitrogen oxides (NO_{X}), respectively into sulphuric acid (H₂SO₄), nitric acid (HNO₃), nitrogen dioxide (NO₂) and nitrogen (N₂), with the addition of ammonia (NH₃) and by means of an electron energizing structure (5, 6), such as an electrostatic precipitator including a set of parallel plates connected to earth and interweaved with a series of frames-bearing wires (5a, 5b, 6a, 6b) fed by a positive impulse voltage from 70 to 100 kV, with a repeat frequency adjustable within a range between 30-300 impulses per second, to transfer to the combustion gas sufficient energy to remove nitrogen oxides in the desired percentage, and to convert said two acids into ammonia salts to be collected in at least one second electrostatic precipitator (15), the method being **characterized** in that it also comprises the stage of condensing part of the water contained in the combustion gases on the walls of at least a second heat exchanger (7, 8) located in the zone in which the gas energizing takes place, to produce reactions in the heterogeneous and humid phase between NO₂, SO₂, H₂O, NH₃, and in that it also comprises the stage of injecting at the entry of said first electrostatic precipitator (3), or else upstream or downstream the energizing stage, the condensate formed on said walls, so as to allow the capture of the salts thanks to water evaporation.

2. A plant for carrying out the method of claim 1 comprising a heat exchanger (2), to cool the combustion gas arriving from a burner (1), at least a first electrostatic precipitator (3), to remove up to about 90% of the light ashes contained in the combustion gas in transit, means (4) to inject the ammonia into the combustion gas, at least one electron energizing structure (5, 6), such as an electrostatic precipitator including a set of parallel plates connected to earth and interweaved with a series of frame-bearing wires (5a, 5b, 6a, 6b) fed by a positive impulse voltage from 70 to 100 kV, with a repeat frequency adjustable within a range between 30-300 impulses per second, to transfer to the combustion gas sufficient energy to remove nitrogen oxides in the desired percentage, a blowing-sucking fan (16) upstream the plant funnel **characterized** in that the plant also comprises at least one heat exchanger (7, 8) located in the zone in which the gas energizing takes place and means (9, 10) to gather and inject within the plant the condensate as gathered, so as to allow the evaporation of the water and the capture of the salts contained in the condensation.

## Patentansprüche

1. Verfahren zur Entfernung von Verunreinigungen aus einem Verbrennungsgas von einem Brenner (1), bei dem die folgenden Schritte ablaufen:
Abkühlen des vom Brenner kommenden Verbrennungsgases in einem ersten Wärmetauscher (2); Entfernen von bis zu 90% der in dem Gas enthaltenen Leichtasche in mindestens einem ersten elektrostatischen Abscheider (3); Umwandeln des Schwefeldioxids (SO₂) und der Stickoxide (NOₓ) in Schwefelsäure (H₂SO₄) bzw. Salpetersäure (HNO₃), Stickstoffdioxid (NO₂) und Stickstoff (N₂), mit Zufügung von Ammoniak (NH₃) und mittels einer elektronenbeschleunigenden Struktur (5, 6), wie z.B. eines elektrostatischen Abscheiders mit einem Satz von parallelen Platten, die geerdet und jeweils zwischen einer Reihe von von Rahmen getragenen Drähten (5a, 5b, 6a, 6b) angeordnet sind, denen eine positive Impulsspannung von 70 bis 100 kV mit einer Wiederholungsfrequenz, die in einem Bereich zwischen 30-300 Impulsen pro Sekunde einstellbar ist, zugeführt wird, um auf das Verbrennungsgas genügend Energie zu übertragen für die Entfernung der Stickoxide in dem gewünschten Prozentsatz und zur Umwandlung der beiden Säuren in Ammoniaksalze, die in mindestens einem elektrostatischen Abscheider (15) gesammelt werden,
dadurch **gekennzeichnet,** daß das Verfahren ferner den Schritt des Kondensierens des in dem Verbrennungsgas enthaltenen Wassers an den Wänden mindestens eines zweiten Wärmetauschers (7, 8) umfaßt, der in der Zone angeordnet ist, in der die Energiezufuhr zu dem Gas stattfindet, um Reaktionen in der heterogenen und feuchten Phase zwischen (NO₂, SO₂, H₂O und NH₃) zu bewirken, und daß es ferner den Schritt umfaßt, am Eingang des ersten elektrostatischen Abscheiders (3), oder auch stromaufwärts oder stromabwärts des Energiezufuhrschrittes, das an den Wänden gebildete Kondensat zu injizieren, um ein Festhalten der Salze dank der Wasserverdampfung zu ermöglichen.

2. Verfahren zur Durchführung des Verfahrens nach Anspruch 1,
mit einem Wärmetauscher (2) zum Abkühlen des von einem Brenner (1) kommenden Verbrennungsgases, mindestens einem elektrostatischen Abscheider (3) zur Entfernung von bis zu 90% der in dem durchströmenden Verbrennungsgas enthaltenen Leichtasche, einer Einrichtung (4) zum Injizieren des Ammoniaks in das Verbrennungsgas, mindestens einer Elektronenbeschleunigungsstruktur (5, 6), wie z.B. einem elektrischen Abscheider mit einem Satz von parallelen Platten, die geerdet und abwechselnd zwischen einer Serie von von Rahmen getragenen Drähten (5a, 5b, 6a, 6b) angeordnet sind, denen eine positive Impulsspannung von 70 bis 100 kV, mit einer in einem Bereich zwischen 30-300 Impulsen pro Sekunde einstellbaren Wiederholungsfrequenz zugeführt wird, um auf das Verbrennungsgas genügend Energie zur Entfernung der Stickoxide in dem gewünschten Prozentsatz zu übertragen, und einem Sauggebläse (16) stromaufwärts des Sammeltrichters der Anlage,
dadurch **gekennzeichnet,** daß die Anlage ferner mindestens einen Wärmetauscher (7, 8) aufweist, der in der Zone, in der die Energiezufuhr zu dem Gas erfolgt, angeordnet ist, und Mittel (9, 10) zum Sammeln des Kondensats und zum Injizieren des gesammelten Kondensats in die Anlage, um die Verdampfung des Wassers und das Festhalten der in dem Kondensat enthaltenen Salze zu ermöglichen.

## Revendications

1. Procédé d'élimination de polluants de gaz de combustion provenant d'un brûleur (1), dans laquelle sont inclues les étapes suivantes :
- refroidissement du gaz de combustion arrivant du brûleur dans au moins un premier échangeur thermique (2) ;
- élimination jusqu'à environ 90 % des cendres légères contenues dans le gaz dans au moins un premier séparateur électrostatique (3) ;
- conversion du dioxyde de soufre (SO₂) et des oxydes d'azote (NOx), respectivement en acide sulfurique (H₂SO₄), acide nitrique (HNO₃), dioxyde d'azote (NO₂) et azote (N), par addition d'ammoniac (NH₃) et au moyen d'une structure d'excitation d'électrons (5, 6), telle qu'un séparateur électrostatique comprenant un ensemble de plaques parallèles reliées à la terre et insérées dans une série de supporte pour des fils conducteurs (5a, 5b, 6a, 6b) alimentés par une tension à impulsion positive de 70 à 100 kV, avec une fréquence répétée ajustable à l'intérieur d'un domaine compris entre 30 et 300 impulsions par seconde, pour transmettre au gaz de combustion une énergie suffisante pour éliminer les oxydes d'azote dans le pourcentage désiré et pour convertir les deux acides en sels d'ammonium à recueillir au moins dans un second séparateur électrostatique (15),
caractérisée en ce qu'
• elle comporte aussi l'étape de condensation d'une partie de l'eau contenue dans les gaz de combustion sur les parois d'au moins un second échangeur thermique (7, 8) placé dans la zone dans laquelle arrive le gaz après excitation, pour produire des réactions dans la phase hétérogène et humide entre NO_{2,}, SO₂, H₂O, NH₃,
et dans laquelle
• on comprend aussi l'étape d'injection à l'entrée du premier séparateur électrostatique (3) ou bien en amont ou en aval de l'étape d'excitation, des condensats formés sur les parois, de façon à permettre de recueillir les sels grâce à l'évaporation de l'eau.

2. Installation pour l'application du procédé de la revendication 1 qui comprend un échangeur thermique (2), pour refroidir le gaz de combustion arrivant du brûleur (1), au moins un premier séparateur électrostatique (3), pour éliminer environ 90 % des cendres légères contenues dans le gaz de combustion de passage, des moyens (4) pour injecter l'ammoniac dans le gaz de combustion, au moins une structure d'excitation d'électrons, telle qu'un séparateur électrostatique comprenant un ensemble de plaques parallèles reliées à la terre et insérées dans une série de supports pour des fils conducteurs (5a, 5b, 6a, 6b) alimentés par une tension à impulsion positive de 70 à 100 kV, avec une fréquence répétée ajustable à l'intérieur d'un domaine compris entre 30 et 300 impulsions par seconde, pour transmettre au gaz de combustion une énergie suffisante pour éliminer les oxydes d'azote dans le pourcentage désiré, un ventilateur soufflant et aspirant (16) en amont de la cheminée de l'installation,
caractérisée en ce que
l'installation comporte aussi au moins un échangeur thermique (7, 8) situé dans la zone dans laquelle arrive le gaz après excitation et des moyens (9, 10) pour recueillir et injecter à l'intérieur de l'installation les condensats une fois recueillis, ainsi que pour permettre à l'eau de s'évaporer et recueillir ainsi les sels contenus dans le liquide condensé.
